# EUROPEAN PATENT APPLICATION

(11) **EP 2 083 610 A2**
(43) Date of publication of application: **29.07.2009**
(21) Application number: 08151072.9
(22) Date of filing: 05.02.2008
(51) Int. Cl.: H05K 7/20

(54) **Dual climate zones**

(30) Priority: 23.01.2008 EP 08150566
(71) Applicant: Flexenclosure AB, 531 30 Lidköping (SE)
(72) Inventor: Kalén, Hans, 614 90 Södreköping (SE)
(74) Representative: Fritsche, Daniel

(57) **Abstract**

A shelter (1) for telecommunication equipment (17), comprising a first space (22) for accommodating the telecommunication equipment (17), a power supply system including a climate-dependent source (5, 6) of electrical energy and an energy storage device (14) connected thereto, for supplying power to the telecommunication device (17), and a climate control system powered by the power supply system and controllable to keep a temperature in the first space (22) below a first predetermined temperature to enable reliable operation of the telecommunication equipment. The shelter (1) further comprises a second space (8) that is thermally insulated from the first space (22), for accommodating the energy storage device (14), the climate control system being controllable to keep a temperature in the second space (8) below a second predetermined temperature lower than the first predetermined temperature, to enable reliable operation of the energy storage device (14), and a controller (16) adapted to control the climate control system to reduce the temperature in the second space (8) to a temperature below the second predetermined temperature when more power is available from the climate-dependent source (5, 6) of electrical energy than is needed to power the telecommunication equipment (17), to thereby store thermal energy in the energy storage device (14).

## Description

### Technical Field of the Invention

The present invention relates to a shelter for telecommunication equipment, having a power supply system with a climate-dependent power source and an energy storage device.

### Technical Background

Today, electrical power is frequently required in parts of the World where a reliable supply of electrical power is lacking. For example, electrical power may be temporarily required in connection with relief efforts, or may be more or less permanently required in remote and/or hard to reach locations for, for example, powering telecommunication equipment in a wireless communication network.

Especially in the latter case, the devices needing power should, furthermore, operate reliably over time so as to enable the communication service provider to provide substantially uninterrupted service.

Traditionally, such telecommunication equipment, for example base stations, has been powered using diesel generators. This approach is, however, neither cost-efficient nor environmentally friendly, since a substantial amount of fuel is consumed and, consequently, green house gases are emitted into the atmosphere. Moreover, fuel must regularly be transported to the, frequently quite inaccessible, base station locations.

Attempts have been made to reduce the cost of operating remotely located base stations by providing them with wind and/or solar power in addition to the diesel generator. Such system are, however, not in widespread use due to the relatively high investment cost and often continued need for frequent fuel transports, which may be at least partly attributed to inefficient use of the available renewable energy.

### Summary of the Invention

In view of the above-mentioned and other drawbacks of the prior art, a general object of the present invention is to enable more cost-efficient and environmentally friendly operation of electrical equipment in remote locations.

According to the present invention, these and other objects are achieved through a shelter for telecommunication equipment, comprising a first space for accommodating the telecommunication equipment, a power supply system including a climate-dependent source of electrical energy and an energy storage device connected thereto, for supplying power to the telecommunication device, and a climate control system powered by the power supply system and controllable to keep a temperature in the first space below a first predetermined temperature to enable reliable operation of the telecommunication equipment. The shelter further comprises a second space that is thermally insulated from the first space, for accommodating the energy storage device, the climate control system being controllable to keep a temperature in the second space below a second predetermined temperature lower than the first predetermined temperature, to enable reliable operation of the energy storage device, and a controller adapted to control the climate control system to reduce the temperature in the second space to a temperature below the second predetermined temperature when more power is available from the climate-dependent source of electrical energy than is needed to power the telecommunication equipment, to thereby store thermal energy in the energy storage device.

By "climate-dependent source of electrical energy" should be understood any power source capable of converting locally available natural forces to electrical energy. Examples of such climate-dependent sources of electrical energy consequently include photovoltaic cells, wind turbines, wave-power devices, hydroelectric power devices, etc.

The energy storage device may be any device capable of storing electrical energy, such as one or several batteries of various kinds (Pb-batteries, Li-ion batteries etc) or capacitor(s). According to a currently preferred embodiment, the energy storage device comprises a battery bank including a plurality of Pb-batteries.

The first and second spaces may be provided within the same enclosure, or may alternatively be provided in respective enclosures that are separated from each other.

The present invention is based on the realization that the provision of the energy storage device, such as batteries, in a space that is thermally insulated from the space accommodating the telecommunication equipment in a shelter, improves the power supply situation through two mechanisms.

Firstly, the telecommunication equipment can generally operate at a higher ambient temperature than the energy storage device. For instance, in the case of the energy storage device being provided in the form of Pb-batteries, the difference in maximum operating temperature is around 20°C (the telecommunication equipment can generally operate at temperatures around 55°C without a significant reduction in life or reliability, whereas Pb-batteries should typically be kept at a temperature below 35°C). Through the provision according to the invention of separate spaces that are thermally insulated from each other, the telecommunication equipment and the energy storage device can be kept at different temperatures, which considerably reduces the power consumption compared to keeping both of these devices at the same (low) temperature.

Secondly, the provision of thermally isolated, individual control of the temperature of the energy storage device enables improved planning of the supply of the power available from the climate-dependent power source(s). At times when there is more climate-dependent power available than is necessary to power the telecommunication equipment, such excess power may be used to cool the energy storage device, that is, to store energy in the form of thermal energy in the bulk of the energy storage device. This is again particularly advantageous when the energy storage device is provided in the form of Pb-batteries, since a battery bank of such batteries have a considerable thermal mass. By storing thermal energy in the energy storage device, the time at which renewed operation of the climate control system is required to cool the energy storage device is postponed, and the available climate-dependent power can instead be used to power the telecommunication equipment or, alternatively, to charge the energy storage device with electrical energy.

Hereby, the cost of instalment as well as the cost of operation of the shelter can be reduced.

To this end, the shelter according to the invention includes a controller adapted to control the climate control system to reduce the temperature in the second space to a temperature below the second predetermined temperature when more power is available from the climate-dependent source of electrical energy than is needed to power the telecommunication equipment, to thereby store thermal energy in the energy storage device.

To further increase the efficiency of the utilization of the available climate-dependent power, the controller may comprise at least one input for receiving power consumption data indicative of an expected future power consumption of the telecommunication equipment, energy storage data indicative of an energy storage level of the energy storage device and power supply data indicative of a supply of electrical power from the climate-dependent source of electrical energy, processing circuitry adapted to determine, based on the acquired data, a timing for controlling the climate control system to reduce the temperature in the second space to the temperature below the second predetermined temperature; and at least one output for sending control signals to the climate control system.

The controller may have one input for receiving the various data on which the generation of the control signal is based via a serial data bus, such as RS232 or 12C, and/or may have inputs dedicated to receive certain parameters or certain data.

Furthermore, the controller may have additional outputs to enable control of sub-units, such as battery sub-units, comprised in the energy storage device for enabling individual control of the charging and/or discharging of the sub-units.

The "power consumption data" may be any data from which an estimation of an expected future power consumption of the power-consuming device can be deduced. For example, the power consumption data may be at least two samples of the instantaneous power consumption of the power-consuming device, the samples being separated in time. Alternatively, the power consumption data may be an externally generated power consumption profile which, in the exemplary case of telecommunication equipment in a base station, may have been supplied by the operator of the wireless telecommunication network.

The "energy storage data" may, for example, be provided in the form of voltage and current. The relative energy storage level can then be determined in a manner known to the skilled person. For example, the relative charge level of various energy storage devices can be determined from the voltage difference between the voltage before and the voltage after applying a load to the energy storage device. Furthermore, the deduced energy storage level may be an absolute or a relative storage/charging level of the energy storage device.

By "power supply data" should be understood any data from which the power supply of the climate-dependent source of electrical power can be deduced. For example, the voltage drop over a known resistance may be used to determine the power.

The shelter according to the invention may, for increased reliability of operation of the telecommunication equipment, advantageously include an auxiliary power source.

Such an auxiliary power source, or auxiliary source of electrical energy, is typically a power source that is not directly dependent on the locally available natural forces. Examples of such auxiliary power sources include the electrical power grid (which may be unreliable), combustion motor based generators, such as diesel/biofuel generators etc.

When planning a shelter for deployment in a particular site and for particular telecommunication equipment, the power supply system may advantageously be dimensioned for a ratio between the average power supplied by the climate-dependent power source and the auxiliary power source. In practice, the ratio arrived at represents an optimum trade-off between initial investment and cost of operation given the environmental conditions at the site of installation.

More particularly, the maximum capacity of the climate-dependent power source, such as a solar panel and/or a wind turbine, the storage capacity of the energy storage device and the maximum capacity of the auxiliary power source are adapted to enable economically advantageous operation of the power-consuming device given the environmental conditions at the site of installation.

For a minimum cost of operation at a remotely located installation site, all of the power supplied to the power-consuming device should ideally originate from the climate-dependent power source. Dimensioning the power supply system to ensure this would, however, often result in a too high initial investment, at least with currently available technology.

When, however, reducing the maximum capacity of the climate-dependent power source to reduce the initial investment, the cost of operation will typically increase due to the resulting need for a higher capacity auxiliary power source, which generally requires relatively frequent maintenance and/or re-fuelling, especially when provided in the form of a combustion engine based generator.

The dimensioning of the power supply system thus results in a maximum capacity of the climate-dependent power source and a maximum energy storage capacity of the energy storage device, and is based upon the assumption that the power supply system can be controlled to keep the maximum average relative amount of energy supplied from the auxiliary power source to a sufficiently low level in order to keep the cost of operation at such a low level that the higher initial investment is justified.

This can be achieved by means of the shelter according to embodiments of the present invention. At times when excess climate-dependent power is available (the wind conditions are good and/or the solar radiation is intense) and the energy storage device is unable to receive more charge and/or is charged at the maximum charge current, the excess climate-dependent power can be used to control the climate control system to reduce the temperature in the second space to a temperature below the second predetermined temperature to store thermal energy in the energy storage device.

In embodiments where the energy storage device is provided in the form of batteries having a substantial thermal mass, the batteries may advantageously be cooled using the excess climate-dependent power. This stored thermal energy can then be used to delay energy consuming cooling of the second space. When the power supply system, in addition to one or several climate-dependent power sources, also has an auxiliary power source, the stored thermal energy can be used to delay or dispense with supply of auxiliary power. Hereby, cost can be reduced and the reliability of the shelter increased.

To improve the efficiency of the utilization of the climate-dependent power even further, the processing circuitry may additionally be adapted to determine, based on the acquired data, an energy storage threshold level at which electrical energy should be supplied to the energy storage device to enable operation of the telecommunication equipment.

The present inventor has realized that this threshold level may be set dynamically based on the acquired knowledge about the predicted demand of energy, the supply of climate-dependent energy and the amount of stored energy. For example, the threshold level may be lowered if the predicted demand of energy is low. Hereby, less or even no power may need to be supplied from the auxiliary power source, since renewed supply of climate-dependent power may become available before the lowered threshold level is reached (for example, the sun may rise and electrical power thus be generated by a solar panel).

Furthermore, the acquired knowledge about the predicted demand of energy, the supply of climate-dependent energy and the amount of stored energy, can be used to control/schedule the auxiliary power source to supply power in an optimal manner. In case of the auxiliary power source being a diesel/biofuel generator, this generator can be scheduled to run at maximum efficiency settings with as few starts per year as possible, which reduces fuel consumption and increases the life of the generator as compared to conventional power supply systems, in which the generator often runs far below its optimum power output and/or intermittently with frequent starts.

The control of the auxiliary power source may, furthermore, advantageously be based upon additional predefined requirements, such as maximum charge/discharge currents for the energy storage device. If the energy storage device is provided in the form of the currently favored (for cost reason) Pb-based batteries, limiting the charge/discharge currents will considerably increase the lifetime of the batteries. Further requirements may include the maximum operational temperature of the energy storage device etc.

According to one embodiment, controller may have an input for acquiring data indicative of an expected future supply of electrical power from the climate-dependent source of electrical energy.

Such data may be based on previously and/or continuously measured climate data, which may, for example, include solar radiation power, wind conditions etc. Moreover, the climate data may be measured directly, using appropriate sensors, or indirectly, via the power generation of the climate-dependent power source(s).

Using a thus provided power supply forecast, the power supply from the auxiliary power source can be scheduled with improved accuracy, whereby further improved performance and cost of operation can be achieved.

Moreover, the shelter according to the present invention may advantageously be included in a base station for deployment in a wireless communication network, further comprising telecommunication equipment for enabling wireless communication.

### Brief Description of the Drawings

These and other aspects of the present invention will now be described in more detail, with reference to the appended drawings showing a currently preferred embodiment of the invention, wherein:
Figs 1a-b schematically illustrate an exemplary shelter for a base station in a wireless communication network;
Fig 2 is a block diagram schematically illustrating an embodiment of the shelter according to the invention; and
Figs 3a-e are diagrams schematically illustrating an exemplary energy management operation performed by the shelter in figs 1a-b.

### Detailed Description of a Preferred Embodiment of the Invention

In the present detailed description, embodiments of the shelter according to the present invention are mainly discussed with reference to a shelter including a photovoltaic solar panel, a particular wind turbine, a diesel/biofuel generator, and Pb-based batteries. As is, however, evident to the person skilled in the relevant art, the teachings of the present invention are equally applicable to power supply systems utilizing other types of climate-dependent power sources, such as wave-power sources, and auxiliary power sources, such as an electric power grid.

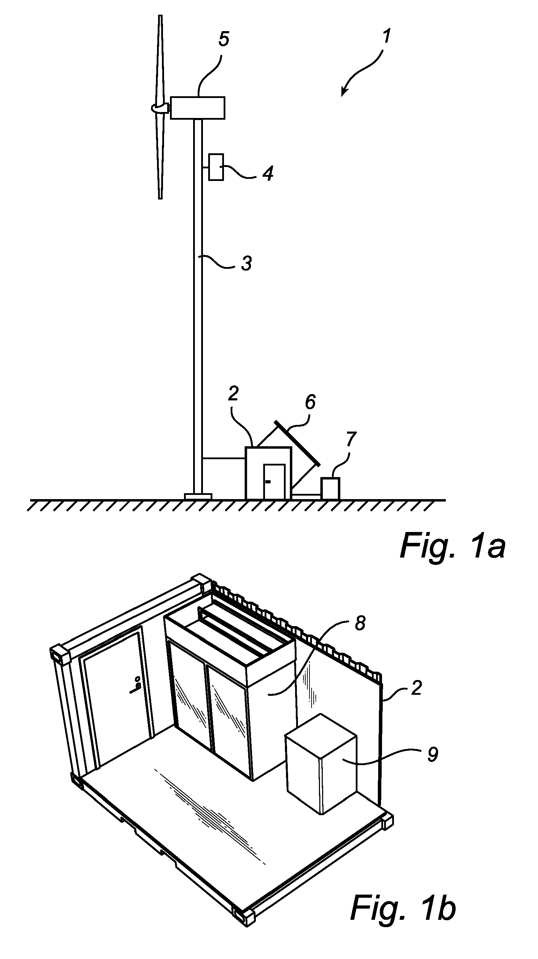

Figs 1a-b schematically illustrate an exemplary shelter according to an embodiment of the present invention for a base station in a wireless communication network. The term "shelter" is here used to denote not only the enclosure actually sheltering the telecommunication equipment of the base station, but also the system supplying power to the base station.

With reference to fig 1a, showing an outside overview thereof, the shelter 1 includes an enclosure 2 housing telecommunication equipment (not shown in fig 1), a mast 3 supporting transmission equipment such as one or several antennas 4 for radio communication and a climate-dependent power source in the form of a wind turbine 5. As is schematically shown in fig 1a, the shelter further includes an additional climate-dependent power source in the form of a solar panel 6 which is supported by the enclosure 2, and an auxiliary power source, here indicated as a diesel/biofuel generator 7.

As is schematically illustrated in fig 1b, showing an inside view of the enclosure 2 without any telecommunication equipment installed, the power supply system of the shelter 1 further includes an energy storage device provided in the form of a battery arrangement. This battery arrangement is housed in a heat-insulated cabinet 8. The space in the enclosure, except for the heat-insulated cabinet constitutes a first space for accommodating the telecommunication equipment. The heat-insulated cabinet 8, on the other hand, constitutes a second space that is thermally insulated from the first space.

The shelter is further provided with a climate control system including an air circulation system (not shown in fig 1b) for cooling the telecommunication equipment, and an air conditioning system 9 for cooling the batteries installed inside the heat-insulated cabinet 8. the air circulation system cools the telecommunication equipment by introducing air from the outside into the enclosure. For most installation sites, this air circulation system need not be equipped with active cooling of the air.

The basic concept illustrated in figs 1a-b is especially suitable for use in remote regions where it is not feasible to power the base station from the power grid. The concept may, however, also advantageously be used in more developed parts of the World, with the aim of reducing emission of green house gases caused by the power consumption of the base station.

Practically each site of deployment for a power supply system according to the present invention in general, and the base station shelter 1 schematically illustrated in figs 1a-b in particular, has its own unique requirements on the power supply system. Furthermore, each power-consuming device, such as the telecommunication equipment in a base station, imposes specific requirements on the power supply system.

In order to provide a suitable system for each set of conditions or requirements, the basic concept of figs 1a-b should be modified based on such considerations as, for example, the power requirements of the power-consuming device, the accessibility of the site, the climate conditions at the site, the type of auxiliary power that is available, the duty cycle requirements of the power-consuming device, and, finally, various cost issues.

Based on all of these requirements, the power supply system is dimensioned for the particular application. Based on a certain price of photovoltaic solar cells, average wind conditions at the site, local personnel costs, fuel cost etc, a particular mix of energy from the climate-dependent power source(s) and the auxiliary power source(s) is optimal. In various embodiments, this mix may typically be around 80% of the total average power over time from the climate-dependent power source(s) and 20% from the auxiliary power source(s). Of course, the size and other properties of the energy storage device are also parameters in the dimensioning process.

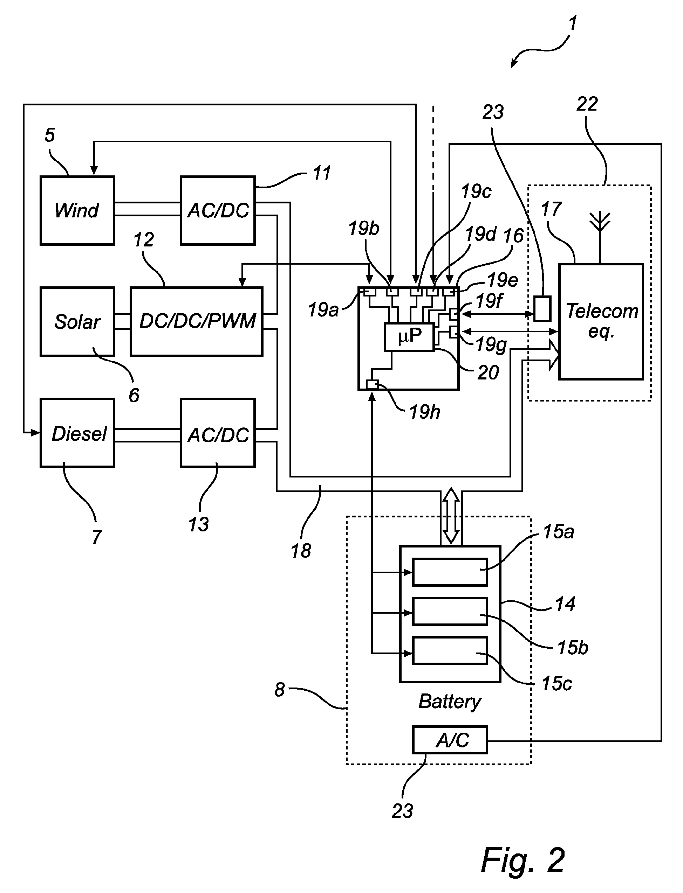

In the following, the power management in the shelter 1 of figs 1a-b will be described with reference to the schematic block diagram in fig 2.

In fig 2, the wind turbine 5, the solar panel 6 and the diesel/biofuel generator 7 are represented by the correspondingly denoted boxes. Connected to each of these power sources 5, 6, 7, is power transforming equipment in the form of a 3-phase rectifier AC/DC converter 11 connected to the wind turbine 5, a DC/DC/PWM (pulse width modulation) inverter 12 connected to the solar panel 6 and a 1-phase or 3-phase rectifier AC/DC converter 13 connected to the diesel/biofuel generator 7. As is evident to the person skilled in the art, these power transformers may be provided as separate units or integrated with the respective power sources 5, 6 and 7.

As is illustrated in fig 2, the shelter 1 further comprises a battery arrangement 14 comprising a plurality of independently controllable battery units 15a-c, and a controller 16 for controlling operation of the shelter 1. Furthermore, the power supply system is here shown connected to telecommunication equipment 17.

The first space 22 accommodating the telecommunication equipment 17, and the second space in the form of the thermally insulated cabinet 8 accommodating the battery arrangement 14 are represented by dashed line boxes in fig 2. Inside the first 22 and second 8 spaces, climate control units 23 and 24, respectively, are provided.

As is indicated by the channel indication 18 in fig 2, power (in the form of electrical current) flows from the power sources 5, 6 and 7, via the power transformers 11, 12 and 13 to the base station 17. The battery arrangement 14 is connected to the power channel 18 and power may flow into the battery arrangement 14 or out of the battery arrangement 14 as controlled by the controller 16. Even though it is not specifically indicated in fig 2, it should be understood that power may be controlled to flow between the independently controllable battery units 15a-c comprised in the battery arrangement 14.

Furthermore, the controller 16 is connected to each of the power sources 5, 6, and 7, each of the battery units 15a-c, the telecom equipment 17 and the climate control units 23 and 24, via a number input/output terminals (I/O:s) 19a-h, for acquisition of data and for control of the respective units. In the presently illustrated embodiment, the processing of acquired data and the generation of control signals for control of the respective units is performed by processing circuitry in the form of a micro-processor 20. Acquisition from other data sources is schematically indicated by the additional, partly dashed line in fig 2.

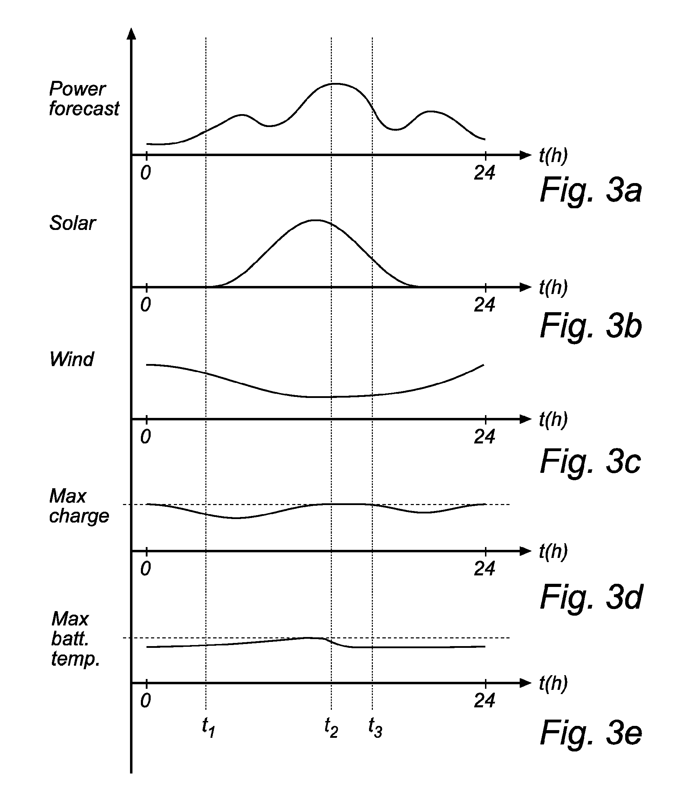

After now having described the basic functional configuration of an exemplary shelter 1 according to the present invention, an exemplary energy management operation performed by the shelter in figs 1a-b will now be described with reference to the schematic diagrams in figs 3a-e.

The diagram in fig 3a schematically illustrates the expected power consumption of the telecommunication equipment 17 as a function of time of day for an exemplary day. As can be seen in fig 3a, the power consumption of the telecommunication equipment 17 typically follows the load on the wireless network, which may be dependent on such factors as time of day, composition of the population at the site (residential vs. business area), rate policies of the operator etc. Through knowledge of the forecast power consumption of the telecommunication equipment 17, it is possible to plan ahead and to save climate-dependent energy in appropriate ways at the appropriate times.

The diagrams in figs 3b and c schematically illustrates the supply of solar power and wind power, respectively, as a function of time of day.

The diagram in fig 3d illustrates the charge level of the battery arrangement 14 and the diagram in fig 3e illustrates the temperature inside the cabinet 8 as a function of the time of day.

In the present example illustrated by figs 3a-e, the situation at midnight is as follows:

The power consumption of the telecommunication equipment is low (fig 3a), there is no supply of solar power (fig 3b), the supply of wind power is good (fig 3c), the batteries are fully charged (fig 3d), and the temperature in the cabinet 8 is a few degrees below the maximum battery temperature.

Before the sun rises, at time t₁, the power consumption of the telecommunication equipment 17 starts to increase, while the wind power decreases. Power is therefore drawn from the batteries (fig 3d). Due to the discharge current from the batteries, the temperature in the cabinet increases slightly (fig 3e).

Around the middle of the day, at time t₂, the power consumption is high (fig 3a) and the wind power is low (fig 3b), but since the solar power is very high, there is excess solar power available which is used to charge the batteries (fig 3d) until they have reached their maximum charge. In the mean time, the temperature in the cabinet 8 has increased and the climate control system is operated using the excess solar power to decrease the temperature therein below the maximum battery temperature (fig 3e).

A while later, at time t₃, the power consumption has reduced, but so has the available solar power, and the wind power is still low. Therefore, power is drawn from the batteries to power the telecommunication equipment 17. Since the sun has set, the temperature in the cabinet 8 has not increased even though the climate control system is not operated.

Due to the storage of thermal energy in the batteries, the electrical energy in the batteries could thus be used to power the telecommunication equipment 17 instead of the climate control system when there was a relative shortage of climate-dependent (solar/wind) power between t₁ and t₂, and the supply of power to the climate control system could be delayed until sufficient climate-dependent power was available.

The person skilled in the art realizes that the present invention by no means is limited to the preferred embodiments described above. For example, although the solar panel is here indicated as being supported by the enclosure of the shelter, it is readily understood that the solar panel may be supported by any other suitable structure.

## Claims

1. A shelter (1) for telecommunication equipment (17), comprising:
a first space (22) for accommodating said telecommunication equipment (17);
a power supply system including a climate-dependent source (5, 6) of electrical energy and an energy storage device (14) connected thereto, for supplying power to said telecommunication device (17); and
a climate control system powered by said power supply system and controllable to keep a temperature in said first space (22) below a first predetermined temperature to enable reliable operation of said telecommunication equipment,
**characterised in that** said shelter (1) further comprises:
a second space (8) that is thermally insulated from said first space (22), for accommodating said energy storage device (14), said climate control system being controllable to keep a temperature in said second space (8) below a second predetermined temperature lower than the first predetermined temperature, to enable reliable operation of said energy storage device (14); and
a controller (16) adapted to control said climate control system to reduce the temperature in said second space (8) to a temperature below the second predetermined temperature when more power is available from said climate-dependent source (5, 6) of electrical energy than is needed to power said telecommunication equipment (17), to thereby store thermal energy in said energy storage device (14).

2. The shelter (1) according to claim 1, wherein said controller (16) comprises:
at least one input (19a-b, d, g-h) for receiving power consumption data indicative of an expected future power consumption of said telecommunication equipment (17), energy storage data indicative of an energy storage level of said energy storage device (14) and power supply data indicative of a supply of electrical power from said climate-dependent source (5, 6) of electrical energy;
processing circuitry (20) adapted to determine, based on said acquired data, a timing for controlling said climate control system to reduce the temperature in said second space (8) to said temperature below the second predetermined temperature; and
at least one output (19e-f) for sending control signals to said climate control system.

3. The shelter (1) according to claim 1 or 2, wherein said controller (16) comprises an input (19a-b, d) for acquiring data indicative of an expected future supply of electrical power from said climate-dependent source (5, 6) of electrical energy.

4. The shelter (1) according to claim 3, wherein said data comprises climate data.

5. The shelter (1) according to any one of claims 2 to 4, wherein said processing circuitry (16) is further adapted to determine, based on said acquired data, an energy storage threshold level at which electrical energy should be supplied to said energy storage device (14) to enable operation of said telecommunication equipment (17), said controller (16) comprising an output (19a-c) for sending control signals to said source of electrical energy.

6. The shelter (1) according to any one of the preceding claims, wherein said power supply system further comprises an auxiliary source (7) of electrical energy that is connected to the energy storage device (14) and connectable to the telecommunication equipment (17).

7. The shelter (1) according to any one of the preceding claims, wherein said climate-dependent source (5, 6) of electrical energy comprises at least one of a solar cell (6) and a wind turbine (5).

8. The shelter (1) according to any one of the preceding claims, comprising a further climate-dependent source of electrical energy.

9. The shelter (1) according to any one of the preceding claims, wherein said climate control system comprises an air conditioning device (9) arranged to cool said second space (8).

10. A base station for deployment in a wireless communication network, comprising:
telecommunication equipment (17) for enabling wireless communication; and
a shelter (1) according to any one of the preceding claims for accommodating and providing power to said telecommunication equipment (17).
